# EUROPÄISCHE PATENTSCHRIFT

(11) **EP 1 547 721 B1**
(45) Veröffentlichungstag und Bekanntmachung des Hinweises auf die Patenterteilung: **20.08.2008**
(21) Anmeldenummer: 04028513.2
(22) Anmeldetag: 02.12.2004
(51) Int. Cl.: B23K 35/02, B23K 9/20, B23K 9/235, B23K 11/34, C23C 22/56

(54) **Verfahren zur Vorbehandlung von Oberflächen von Schweissteilen aus Aluminium oder seinen Legierungen und entsprechende Schweissteile**
Process for pretreating aluminium or aluminium alloy surfaces to be welded and accordingly pretreated parts
Procédé de prétraitement de surfaces en aluminium ou un alliage d'aluminium destinées à être soudées et pièces en aluminium ainsi traitées

(30) Priorität: 12.12.2003 DE 10358590
(43) Veröffentlichungstag der Anmeldung: 29.06.2005
(73) Patentinhaber: Newfrey LLC, Newark, Delaware 19711 (US)
(72) Erfinder: Drexler, Frank, 63683 Ortenberg (DE)
(74) Vertreter: Haar, Lucas Heinz Jörn

(56) Entgegenhaltungen:
- EP-A1- 0 291 277
- WO-A-02/31073
- DE-A1- 19 856 613
- US-A- 4 633 054

## Beschreibung

Die Erfindung betrifft ein Verfahren zur Vorbehandlung von Oberflächen von Schweißteilen aus Aluminium oder seinen Legierungen, die vor dem Verschweißen einer Behandlung in einer sauren, wässrigen Lösung unterzogen werden, wobei die saure, wässrige Lösung Ionen der Elemente Bor und/oder Silizium und/oder Titan und/oder Zirkon und/oder Hafnium enthält.

Die Erfindung betrifft außerdem nach dem Verfahren hergestellte Schweißteile aus Aluminium oder seinen Legierungen.

Ein derartiges Verfahren und die nach dem Verfahren hergestellten Schweißteile sind aus der DE 198 56 613 A1 bekannt. Die Behandlung verhindert dauerhaft die Bildung einer Oxidschicht, die sich auf frisch angeritztem Aluminium an Luft und mit Wasser schon in wenigen Sekunden bildet. Eine derartige Oxidschicht bildet einen Korrosionsschutz, beeinflusst jedoch den Schweißprozess negativ. Durch die genannte Behandlung in der sauren Lösung wird zum einen die Oxidschicht entfernt und zum anderen die Neubildung der Oxidschicht dauerhaft verhindert.

Beim Zuführen von so behandelten Schweißteilen zum Verschweißen in einer automatischen Apparatur ergibt sich nun das Problem, dass die Schweißteile durch die Behandlung einen hohen Reibungskoeffizient für die Gleit- oder Rollreibung aufweisen. Dies führt zu Schwierigkeiten bei der automatischen Zuführung der Schweißteile zu dem Ort der Verschweißung in der Apparatur.

Zur Behebung dieses Problems wurde schon versucht, die Schweißteile mit einem Gleitmittel zu versehen. Das Gleitmittel erwies sich jedoch als störend bei der Weiterverarbeitung der Schweißteile und förderte deren Verschmutzung.

Der Erfindung liegt die Aufgabe zugrunde, ein Verfahren zur Vorbehandlung von Oberflächen von Schweißteilen aus Aluminium oder seinen Legierungen und somit entsprechende Schweißteile zu schaffen, wobei zum einen die Oxidschichten entfernt und die Neubildung von Oxidschichten der Schweißteile dauerhaft verhindert sowie zum anderen das Zuführen der Schweißteile in der Zuführeinrichtung verbessert wird.

Die Aufgabe wird in der Erfindung überraschend dadurch gelöst, dass vor der Behandlung in der sauren, wässrigen Lösung ein Polierschritt durchgeführt wird. Diese Lösung ist überraschend aus dem Grunde, da durch die Behandlung in der sauren, wässrigen Lösung die Oberfläche der Schweißteile zum Entfernen der Oxidschicht verändert wird. Es war daher nicht zu erwarten, dass ein vor der Behandlung in der sauren, wässrigen Lösung liegender Polierschritt einen günstigen Einfluss auf das Gleit- und Rollverhalten der Schweißteile haben würde.

Durch die in den abhängigen Ansprüchen aufgeführten Maßnahmen sind vorteilhafte Weiterbildungen und Verbesserungen des erfindungsgemäßen Verfahrens und der erfindungsgemäßen Schweißteile möglich. Besonders kostengünstig ist das Polieren der Schweißteile durch Rütteln in einem Wasserbad. Um die Rückstand des Kaltumformens zu entfernen, ist es vorteilhaft, dass vor dem Polierschritt mindestens ein Reinigungs- und mindestens ein Spülschritt durchgeführt wird. Das Pressöl wird durch Zentrifugieren der Schweißteile entfernt. Eine Vermeidung von Gesundheitsschäden wird dadurch erreicht, dass die saure, wässrige Lösung chromfrei ist. Die besten Ergebnisse beim Polieren werden erzielt, wenn der Polierschritt nur über eine Dauer von höchstens 1 Stunde durchgeführt wird. Eine weitere Verbesserung der Zuführeigenschaften wird dadurch erreicht, dass die Schweißteile nach dem Polieren und vor dem Behandeln in der sauren, wässrigen Lösung einer Wärmebehandlung unterzogen werden, wobei die Temperatur höchstens 200° C beträgt.

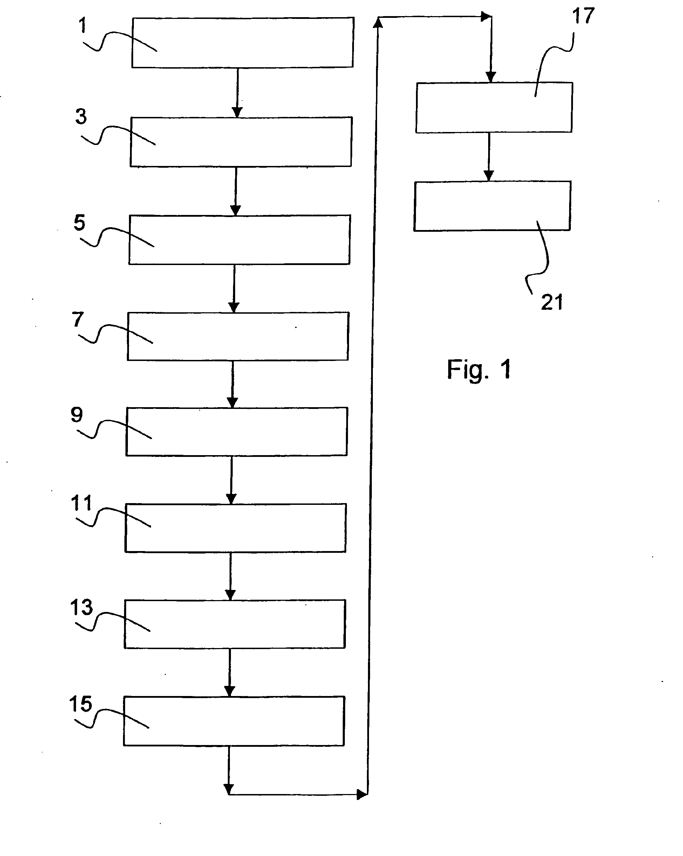

Die Erfindung wird nachfolgend anhand eines Ausführungsbeispiels näher erläutert, das in Figur 1 dargestellt ist.

Figur 1 zeigt ein Ablaufschema für ein erfindungsgemäßes Verfahren zur Herstellung von erfindungsgemäßen Schweißteilen aus Aluminium oder einer Aluminiumlegierung.

Schweißteile, beispielsweise Stifte oder Bolzen, werden in vielen Bereichen der industriellen Fertigung eingesetzt und ermöglichen eine lochlose, metallische Verbindung zwischen Grundstruktur und einer zu befestigenden Komponente.

Schweißbolzen oder -stifte können dazu dienen, Rohrleitungen, Druckknöpfe, Kunststoffmuttern oder Kabelhalter zu befestigen. Ein derartiger Schweißbolzen weist einen Kopf und einen Schaft auf, wobei die Anschweißfläche am Schweißkopf ausgebildet ist. Der Schaft dient nach dem Anschweißen an die Grundstruktur zur Befestigung der Komponente.

Die Verfahrensschritte zur Herstellung derartiger Schweißteile sind in Figur 1 schematisch anhand von Rechtecken dargestellt, die mittels Pfeilen verbunden sind. Jeder Verfahrensschritt ist mit einem Bezugszeichen versehen. Die verbindenden Pfeile zeigen an, in welcher Abfolge die einzelnen Verfahrensschritte durchlaufen werden.

Die oben angegebenen Schweißteile werden aus einem Draht in einem Schritt 1 durch Kaltumformung in die gewünschte Form und Länge gebracht. In einem darauf folgenden Schritt 3 wird mittels Zentrifugieren das Pressöl von den Schweißteilen entfernt. Ein sich daran anschließender Schritt 5 beinhaltet die Reinigung der Schweißteile mittels einer Säure oder eine Base. In einem danach folgenden Schritt 7 werden die gereinigten Schweißteile gespült.

Für den sich daran anschließenden Polierschritt 9 werden die Schweißteile in eine Trommel gegeben und mit Wasser bedeckt. Nachdem die Trommel in Rotation versetzt wird, scheuern die Schweißteile gegeneinander und es wird hierdurch ein Poliereffekt erzielt. Das Polieren wird über einen Zeitraum von höchstens einer Stunde, vorzugsweise höchstens 30 Minuten durchgeführt.

Nach dem Polieren der Schweißteile durch Rotationen der Trommel werden die Schweißteile in einem Schritt 11 mit Wasser gespült und anschließend aus der Trommel entleert und in einem Schritt 13 in einer Zentrifuge getrocknet. An diesen Schritt schließt sich in einem bevorzugten Ausführungsbeispiel vor der Behandlung in der wässrigen, sauren Lösung eine Wärmebehandlung 15 an, die bei einer Temperatur von höchstens 200° C, vorzugsweise höchstens 150° C, durchgeführt wird.

Nachdem die Wärmebehandlung abgeschlossen ist, wird in einem Schritt 17 die bekannte Behandlung mit der wässrigen, sauren Lösung durchgeführt, bevor in einem sich daran anschließenden Schritt 21 die Schweißteile abschließend getrocknet werden. Als wässrige, saure Lösung wird vorzugsweise das unter der Bezeichnung Alodine 2040 der Firma Henkel Oberflächentechnologie (Henkel Surface Technologies) verwendet. Hierbei handelt es sich um eine chromfreie Lösung.

In einem weiteren Ausführungsbeispiel ist es auch vorstellbar, dass der Polierschritt 9 in einem Rüttelbad durchgeführt wird, wobei auch in diesem Fall die Schweißteile vollständig mit Wasser bedeckt sein müssen. Das Rüttelbad besteht aus einem quaderförmigen Behälter, der durch eine entsprechende, bekannte Mechanik in Bewegung ("Rütteln") gesetzt wird, so dass die Schweißteile gegeneinander scheuern.

## Patentansprüche

1. Verfahren zur Vorbehandlung von Oberflächen von Schweißteilen aus Aluminium oder seinen Legierungen, die vor dem Verschweißen einer Behandlung (17) in einer sauren, wässrigen Lösung unterzogen werden, wobei die saure, wässrige Lösung Ionen der Elemente Bor und/oder Silizium und/oder Titan und/oder Zirkon und/oder Hafnium enthält, **dadurch gekennzeichnet, dass** vor der Behandlung in der sauren, wässrigen Lösung ein Polierschritt (9) durchgeführt wird.

2. Verfahren nach Anspruch 1, **dadurch gekennzeichnet, dass** das Polieren durch Rütteln der Schweißteile in einem Wasserbad erfolgt.

3. Verfahren nach einem der Ansprüche 1 oder 2, **dadurch gekennzeichnet, dass** die Schweißteile aus Drahtmaterial mittels Kaltumformung hergestellt werden.

4. Verfahren nach Anspruch 3, **dadurch gekennzeichnet, dass** zur Vorbereitung der Oberflächenbehandlung vor dem Polierschritt mindestens ein Reinigungsschritt (5) und mindestens ein Spülschritt (7) durchgeführt wird.

5. Verfahren nach Anspruch 4, **dadurch gekennzeichnet, dass** die Schweißteile zur Reinigung nach dem Kaltumformen zentrifugiert (3) werden.

6. Verfahren nach einem der Ansprüche 1 bis 5, **dadurch gekennzeichnet, dass** die Schweißteile Stifte oder Bolzen darstellen.

7. Verfahren nach einem der Ansprüche 1 bis 6, **dadurch gekennzeichnet, dass** die saure, wässrige Lösung chromfrei ist.

8. Verfahren nach einem der Ansprüche 1 bis 7, **dadurch gekennzeichnet, dass** der Polierschritt über eine Dauer von höchstens 1 Stunde durchgeführt wird.

9. Verfahren nach einem der Ansprüche 1 bis 8, **dadurch gekennzeichnet, dass** nach dem Polierschritt und vor der Behandlung mit der sauren, wässrigen Lösung eine Wärmebehandlung (15) durchgeführt wird.

10. Verfahren nach Anspruch 9, **dadurch gekennzeichnet, dass** die Wärmebehandlung bei einer Temperatur von höchstens 200°C durchgeführt wird.

11. Schweißteil aus Aluminium oder einer Aluminiumlegierung hergestellt nach einem der Ansprüche 1 bis 7.

## Claims

1. Method for pretreating the surfaces of weld parts of aluminum or alloys thereof that prior to welding are subjected to a treatment (17) in an acidic, aqueous solution, wherein the acidic, aqueous solution contains ions of the elements boron and/or silicon and/or titanium and/or zirconium and/or hafnium, **characterized in that** a polishing step (9) is performed prior to the treatment in the acidic, aqueous solution.

2. Method of claim 1, **characterized in that** the polishing is accomplished by vibrating the weld parts in a water bath.

3. Method of one of claims 1 or 2, **characterized in that** the weld parts are manufactured from wire material by cold forming.

4. Method of claim 3, **characterized in that** at least one wash step (5) and at least one rinse step (7) is performed prior to the polishing step in preparation for the surface treatment.

5. Method of claim 4, **characterized in that** the weld parts are centrifuged (3) to clean them after cold forming.

6. Method of one of claims 1 - 5, **characterized in that** the weld parts are studs or pins.

7. Method of one of claims 1 - 6, **characterized in that** the acidic, aqueous solution is chromium-free.

8. Method of one of claims 1 - 7, **characterized in that** the polishing step is carried out for a maximum period of 1 hour.

9. Method of one of claims 1 - 8, **characterized in that** a heat treatment (15) is performed after the polishing step and prior to the treatment with the acidic, aqueous solution.

10. Method of claim 9, **characterized in that** the heat treatment is carried out at a maximum temperature of 200 °C.

11. Weld part of aluminum or an aluminum alloy produced according to one of claims 1 - 7.

## Revendications

1. Procédé de traitement préalable de surfaces de pièces à souder en aluminium ou en un de ses alliages, qui sont soumises, avant l'opération de soudage, à un traitement (17) dans une solution acide aqueuse, laquelle solution acide aqueuse contient des ions des éléments bore et/ou silicium et/ou titane et/ou zirconium et/ou hafnium, **caractérisé en ce que** l'on réalise une étape de polissage (9) avant le traitement dans la solution acide aqueuse.

2. Procédé selon la revendication 1, **caractérisé en ce que** le polissage s'effectue en agitant les pièces à souder dans un bain d'eau.

3. Procédé selon l'une quelconque des revendications 1 et 2, **caractérisé en ce que** les pièces à souder sont fabriquées à partir d'un matériau en fil par formage à froid.

4. Procédé selon la revendication 3, **caractérisé en ce que**, pour préparer le traitement de surface avant l'étape de polissage, on effectue au moins une étape de nettoyage (5) et au moins une étape de rinçage (7).

5. Procédé selon la revendication 4, **caractérisé en ce que** les pièces à souder sont centrifugées (3) pour le nettoyage après le formage à froid.

6. Procédé selon l'une quelconque des revendications 1 à 5, **caractérisé en ce que** les pièces à souder représentent des broches ou des boulons.

7. Procédé selon l'une quelconque des revendications 1 à 6, **caractérisé en ce que** la solution acide aqueuse est exempte de chrome.

8. Procédé selon l'une quelconque des revendications 1 à 7, **caractérisé en ce que** l'étape de polissage est réalisée sur une durée au maximum de 1 heure.

9. Procédé selon l'une quelconque des revendications 1 à 8, **caractérisé en ce que** l'on procède à un traitement thermique (15) après l'étape de polissage et avant le traitement avec la solution acide aqueuse.

10. Procédé selon la revendication 9, **caractérisé en ce que** le traitement thermique est réalisé à une température au maximum de 200 °C.

11. Pièce à souder en aluminium ou en alliage d'aluminium fabriquée selon l'une quelconque des revendications 1 à 7.
